# FASCICULE DE BREVET EUROPEEN

(11) **EP 3 293 565 B1**
(45) Date de publication et mention de la délivrance du brevet: **06.11.2024**
(21) Numéro de dépôt: 16306121.1
(22) Date de dépôt: 07.09.2016
(51) Int. Cl.: G02C 7/02, B29D 11/00, G01M 11/02

(54) **VERRE DE LUNETTES MUNI D'UN MARQUAGE PERMANENT**
BRILLENGLAS, DAS MIT EINER PERMANENTEN MARKIERUNG VERSEHEN IST
SPECTACLE LENS PROVIDED WITH A PERMANENT MARKING

(43) Date de publication de la demande: 14.03.2018
(73) Titulaire: Essilor International, 94220 Charenton-le-Pont (FR)
(72) Inventeur: MAURICE, Sébastien, 94227 CHARENTON-LE-PONT CEDEX (FR); HUBERT, Christophe, 94227 CHARENTON-LE-PONT CEDEX (FR); AUFFRAY, Stéphane, 94227 CHARENTON-LE-PONT CEDEX (FR); FERREIRA, Daniel, 94227 CHARENTON-LE-PONT CEDEX (FR)
(74) Mandataire: Santarelli

(56) Documents cités:
- WO-A1-2014/090883
- US-A1- 2014 016 083
- US-A1- 2016 116 762
- US-B1- 6 188 040
- US-B2- 10 088 602
- US-B2- 10 330 953
- US-B2- 9 946 093

## Description

### DOMAINE DE L'INVENTION

L'invention concerne le marquage des verres de lunettes.

### ARRIERE PLAN TECHNOLOGIQUE

On sait que les verres de lunettes sont munis de marquages qui servent à les identifier ou à matérialiser des points géométriques remarquables utiles à leur montage dans une monture de lunettes.

Certains marquages sont configurés pour ne plus être présents ou pour être enlevés lorsque le verre est en place dans une monture de lunettes, par exemple des marquages à l'encre jaune identifiant le centre géométrique ou le point de référence prisme, qui ne sont plus utiles une fois que le verre est en place dans une monture de lunettes.

D'autres marquages sont permanents, par exemple pour identifier le fabricant du verre de lunettes.

Parmi l'art antérieur pertinent, on trouve US 2014/016083 (ablation laser de couches d'un revêtement interférenciel de la face avant du verre de lunettes) ainsi que US 10 330 953, US 9 946 093 et US 10 088 602).

### OBJET DE L'INVENTION

L'invention vise à améliorer les marquages permanents des verres de lunettes, de façon simple et commode.

L'invention telle de définie dans le jeu de revendications inclut un verre de lunettes muni d'un marquage permanent selon la revendication 1 ainsi qu'un procédé de marquage selon la revendication 14, mais pas un procédé de lecture du marquage d'un verre.

L'invention propose à cet effet un verre de lunettes muni d'un marquage permanent, caractérisé en ce que ledit verre comporte un substrat et un revêtement interférentiel anti-reflets ou miroir recouvrant ledit substrat du côté de la face avant, ledit revêtement interférentiel formant un motif code-barres unidimensionnel ou bidimensionnel, ledit marquage étant formé par une pluralité de lacunes ponctuelles sur une partie d'une épaisseur dudit revêtement interférentiel, ladite face avant présentant en-dehors desdites lacunes ponctuelles un coefficient de réflexion de la lumière ayant une valeur nominale prédéterminée et dans chaque dite lacune ponctuelle un coefficient de réflexion de la lumière ayant une valeur particulière prédéterminée différente de ladite valeur nominale.

L'invention est basée sur l'observation qu'un tel motif code-barres n'implique pas nécessairement une gêne pour le porteur des lunettes comportant ce verre. Au contraire, il est possible, par exemple en mettant en oeuvre les caractéristiques préférées exposées ci-après, de munir le verre de lunettes d'un tel marquage qui est invisible ou en tout cas peu visible ou non gênant pour le porteur, qui voit le verre du côté de la face arrière.

En effet, si l'on note x la valeur particulière du coefficient de réflexion et y la valeur nominale, le rapport x/y ou y/x entre ces coefficients (qui caractérisent l'intensité des reflets observés lors d'une observation de la face avant) est relativement important, par exemple compris entre un facteur 1,5 et un facteur 15, ce qui conduit à un contraste important et permet aisément d'observer la marque permanente.

Par contre, en transmission, la transmission est respectivement 1-x-a et 1-y-a (a étant l'absorption) ; ce qui implique un rapport de transmission de (1-x-a)/(1-y-a) ou l'inverse, ce qui conduit typiquement à avoir dans une zone une transmission donnée et dans une autre une transmission différente de la première par un facteur compris entre 0,8 et 1,2 soit une différence comparativement peu notable pour l'œil du porteur.

Le « coefficient d'absorption » représente l'absorption à une longueur d'onde du spectre visible, et est défini ici comme le rapport entre l'absorbance A et le chemin optique L (= A/L) pour un faisceau électromagnétique de longueur d'onde donnée (ici dans le domaine du visible) dans un milieu donné. Ce rapport est exprimé en m⁻¹ ou cm⁻¹, en particulier selon la norme ISO/CD 11551.

Le « facteur de transmission », ou la « transmittance » Tv (tau indice v) correspond à la fraction de flux lumineux qui traverse un article optique, en fonction de la longueur d'onde, illuminée par un illuminant couvrant au moins l'ensemble du spectre visible, par exemple l'illuminant solaire ou l'illuminant D65. Le facteur Tv correspond à une définition internationale normalisée (norme ISO 13966:1998) et est mesuré conformément à la norme ISO 8980-3. Il est défini dans la gamme de longueur d'onde de 380 à 780 nm.

Par « coefficient de réflexion », on entend le taux de lumière réfléchie par la surface d'un article optique, illuminée par un illuminant couvrant au moins l'ensemble du spectre visible, par exemple l'illuminant solaire ou l'illuminant D65. Le taux de réflexion est de préférence mesuré avec un rayon de lumière incidente à la surface avec un angle de 2° ou de 10°. Lorsque cela n'est pas précisé, le coefficient de réflexion ne tient compte que de la lumière visible, c'est-à-dire la lumière ayant une longueur d'onde comprise entre 380 nm et 780 nm, dit autrement « illuminant D65 ».

Du fait que le marquage permanent est visible du côté de la face avant par réflexion, le capteur d'images d'un produit grand public tel qu'un smartphone est en mesure de capter l'image de ce marquage de façon simple.

Du fait que ce marquage forme un code-barres unidimensionnel ou bidimensionnel, le traitement de l'image ainsi capturée permet de retrouver le contenu, par exemple un identifiant propre au verre de lunettes, encodé par le code unidimensionnel ou bidimensionnel.

A partir de ce contenu, il est possible d'offrir un accès automatique à des ressources en ligne, par exemple directement avec le smartphone qui a capturé l'image du marquage.

Le verre de lunettes selon l'invention est ainsi en mesure d'offrir un accès simple et commode à des ressources en ligne, tout en restant confortable pour le porteur et simple à fabriquer et à mettre en place dans une monture de lunettes.

Selon des caractéristiques avantageuses :
- ledit verre est dans un état détouré pour avoir le contour d'une monture de lunettes prédéterminée ;
- ledit motif est bidimensionnel comportant une pluralité de modules juxtaposés de façon matricielle, ladite pluralité de modules comportant, pour encoder une information selon un langage binaire, des modules d'un premier type chacun formé par une pluralité de dites lacunes ponctuelles et des modules d'un second type chacun situé en-dehors d'une dite lacune ponctuelle ;
- ledit motif est compris dans un carré ayant un côté de 2 mm ;
- chaque dit module présente la forme d'un carré ayant un côté de 90 µm ;
- ledit code bidimensionnel comporte entre 21×21 et 33×33 modules ;
- ladite pluralité de lacunes ponctuelles dont est formé chaque module est agencée en une matrice comportant une pluralité de lignes et de colonnes ;
- ledit revêtement interférentiel est anti-reflets, ladite valeur nominale est inférieure à 1,4% et de préférence inférieure à 0,85% et ladite valeur particulière est comprise entre 8 et 15% ;
- ledit revêtement interférentiel est miroir, ladite valeur nominale est comprise entre 12% et 15% et ladite valeur particulière est comprise entre 32% et 34% ;
- ladite valeur particulière est plus élevée que ladite valeur nominale de sorte que ledit motif est vu comme clair sur fond sombre, ledit code-barres unidimensionnel ou bidimensionnel comporte sur une étendue prédéterminée des zones foncées et des zones claires, et ledit motif est formé par l'ensemble des zones foncées dudit code ;
- ledit revêtement interférentiel est miroir, ladite valeur nominale est comprise entre 10% et 15% et ladite valeur particulière est comprise entre 5% et 10% en étant inférieure à la valeur nominale ; et/ou
- ledit revêtement interférentiel est miroir et ledit motif est vu comme sombre sur fond clair, ledit code unidimensionnel ou bidimensionnel comporte sur une étendue prédéterminée des zones foncées et des zones claires, et ledit motif est formé par l'ensemble des zones foncées dudit code.

L'invention concerne également une paire de lunettes comportant au moins un verre tel qu'exposé ci-dessus.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 montre un verre de lunettes selon l'invention tel que vu par un observateur situé du côté de la face avant de ce verre de lunettes ;
- la figure 2 est une vue semblable à la figure 1 mais avec le verre de lunettes montré tel que vu par un observateur situé du côté de la face arrière ;
- la figure 3 est une vue similaire à la figure 1, mais avec le verre qui n'est pas encore détouré ;
- la figure 4 est une vue en coupe transversale du verre de lunettes des figures 1 à 3, illustrant schématiquement la différence de réflexion entre une zone gravée et une zone non gravée de la face avant de ce verre ;
- la figure 5 montre en détails le marquage du verre montré sur les figures 1 à 3, et plus précisément par commodité de représentation un marquage semblable concernant un autre code bidimensionnel, le code du verre de lunettes des figures 1 à 3 et le code de la figure comportant une pluralité de modules ;
- la figure 6 est un agrandissement partiel de la figure 5, montrant en détails certains des modules formant le code bidimensionnel ;
- la figure 7 montre différentes versions d'un code bidimensionnel comportant respectivement 21x21, 25x25, 29x29 et 33x33 modules ;
- la figure 8 représente un verre de lunettes similaire à celui montré sur les figures 1 à 4 mais avec le marquage qui est vu comme sombre sur fond clair ; et
- la figure 9 représente une paire de lunettes équipée de verres similaires au verre montré sur la figure 8, ainsi qu'un appareil portable électronique configuré pour prendre une photographie du code et analyser la photographie pour retrouver le code.

### DESCRIPTION DETAILLEE D'EXEMPLES DE REALISATION

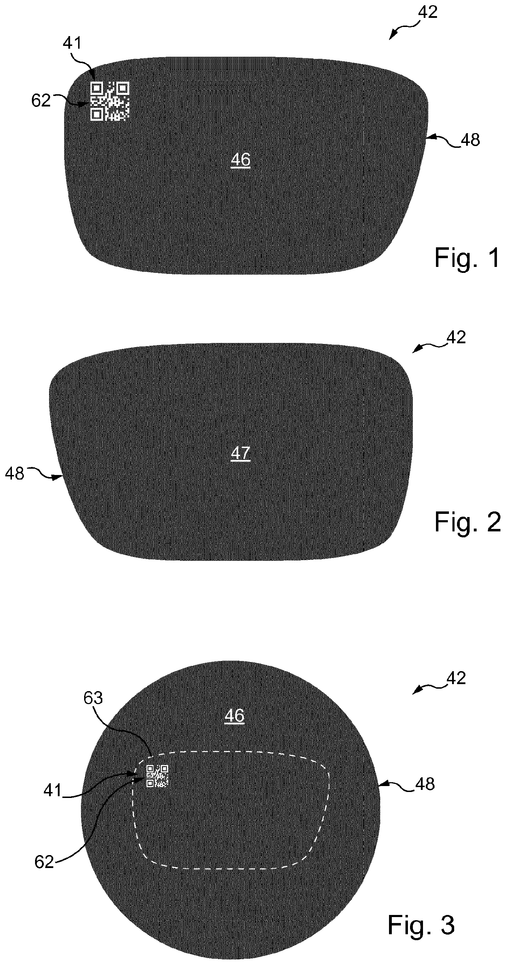

La figure 1 montre un verre 42 de lunettes muni d'un marquage 41 qui forme un code bidimensionnel.

Le verre 42 présente une face avant 46, une face arrière 47 et une face latérale 48 reliant les faces optiques avant 46 et arrière 47.

Le code bidimensionnel est ici un code-barres du type QR code (« Quick Response code ») et encode comme contenu la série de caractères numériques « 12345678 ».

Cette série de caractères est un identifiant unique propre au verre. Cet identifiant sera donc différent pour un verre différent. De façon alternative, dans un cas non préféré, l'identifiant peut être unique à une paire de verre montée, ou destinée à être montée, sur une même monture, pour un même porteur final. Cette alternative est non préférée puisqu'il est généralement utile de différencier le verre gauche du verre droit d'une paire de lunette, ces verres ayant souvent une puissance optique différente et au minimum un contour différent, généralement miroir l'un de l'autre.

Le marquage 41 est une zone de surface gravée sur la face avant 46 du verre de lunettes, formant un motif 62 visible par un observateur situé du côté de la face avant 46 du verre 42.

La gravure est ici réalisée par ablation, c'est-à-dire par retrait d'une quantité de matière, au moyen d'un faisceau laser.

Comme on peut le constater sur la figure 2, le motif 62 n'est pas visible pour un observateur situé du côté de la face optique arrière 47 du verre.

Il est bien entendu souhaitable que les propriétés optiques du motif 62 soient telles que le motif 62 est transparent, c'est-à-dire qu'il n'est pas visible ou alors difficilement visible ou en tout cas non gênant pour l'utilisateur. Des exemples de telles propriétés, en lien avec les capacités de réflexion et de transmission sont décrits ultérieurement.

Par transparent, on entend que le motif 62 n'a pas d'effet significatif sur la diffusion locale de la lentille. Par exemple, une valeur de trouble (« haze » en anglais) dans une zone comprenant le motif 62 est augmentée de moins de 0,1, de préférence de moins de 0,05 ou même 0,02 par rapport à une zone de la surface de la lentille qui ne comprend pas le motif 62, lorsque la surface mesurée est d'environ 50 ou 55 fois supérieur à la surface occupée par le motif 62, ou alternativement toute autre mesure équivalente de la diffusion. En outre, en transparent, on entend également que le support ne réduit pas la valeur de transmission de plus de 20% de la valeur de transmission d'une partie de la lentille sans ledit support.

Un exemple de procédé pour mesurer l'impact du motif 62 sur la diffusion est de mesurer la valeur de haze dans une zone comprenant le motif 62.

La valeur de haze est mesurée par la mesure de la lumière en transmission en utilisant par exemple l'appareil Haze-Guard Plus ^{©} de BYK-Gardner selon la méthode de la norme ASTM D1003-00, qui est incorporée ici dans son intégralité par référence. Toutes les références à des valeurs de «haze» dans cette application sont selon ladite norme. L'instrument est d'abord calibré selon les instructions du fabricant. Ensuite, l'échantillon est placé sur le faisceau de lumière de transmission de l'appareil de pré-calibrée et la valeur de haze est enregistrée.

Il est utile de savoir que pour le Haze-Guard plus^{©} spécifique utilisé par les inventeurs, le spot de mesure utilisée par le Haze-Guard plus^{©} est un spot ayant un diamètre d'environ 16mm. En comparaison, dans les modes spécifiques de réalisation de l'invention, utilisés ci-dessous pour la mesure du haze, le motif est un carré avec un côté d'environ 1.9mm. Ainsi, ce qui est mesuré est l'impact sur la valeur de haze d'une matrice de 1,9 * 1,9 dans une zone de surface Pi (8) ². Le rapport de la surface mesurée par rapport à la surface du motif est donc d'environ 55.

En outre, une valeur moyenne de transmission dans la même zone mesurée par le Haze-Guard plus^{©} a été faite.

Selon la méthodologie de mesure expliquée ci-dessus, l'expérience suivante a été réalisée:
Verre 1 (substrat en polycarbonate avec revêtements anti-abrasion et antireflet (AR):
   Avant de graver le motif, la valeur de haze mesurée est de 0,17 et la transmission est de 97,9%.
   Après la gravure d'un motif 1,9 * 1,9 mm selon l'invention, la valeur de haze mesurée est de 0,18 et la transmission 97,9%
Verre 2 (substrat en polycarbonate avec revêtements anti-abrasion et anti reflet):
   Avant de graver le motif, la valeur de haze mesurée est de 0,32 et la transmission est de 96,8%.
   Après la gravure d'un motif 1,9 * 1,9 mm selon l'invention, la valeur de haze mesurée est de 0,32 et la transmission 96,8%
   Lentille 3 (substrat d'indice 1,6 en Poly-thio-uréthane avec avec revêtements anti-abrasion et antireflet (AR)) gravé avec un support qui est non conforme à l'invention;
   Avant de graver le motif, la valeur de haze mesurée est de 0,23 et la transmission est de 97,5%.
   Après la gravure d'un motif 1.9 * 1.9mm en utilisant une gravure au laser qui élimine localement tout le matériel d'AR et enlève une partie de la couche anti-abrasion, la valeur de haze mesurée est de 0,89 et la transmission 96,9%

Comme on peut le comprendre, la lentille gravée 3 est non conforme à l'invention puisque l'impact de ce motif 62 spécifique induit trop de diffusion locale.

Ainsi, le terme transparent, selon l'invention signifie que l'impact du motif sur la valeur de haze, mesurée pour une surface supérieure à celle du motif d'un facteur de 55, est inférieure à 0,1, de préférence inférieur à 0,05, et plus préférablement inférieure à celle 0,02.

L'homme du métier, connaissant les mesures expérimentales ci-dessus, peut facilement en déduire, en utilisant une quantité limitée d'expériences, une meilleure compréhension du mot "transparent", même pour des protocoles de mesure des valeurs de haze ayant un rapport de surface entre la surface mesurée et la surface du motif 62 largement différent de celui présenté ci-dessus. Ainsi, il peut remonter à des valeurs de haze lorsque par exemple, l'on mesure la valeur de haze du motif seul, ou lors d'une mesure de haze avec un spot de mesure de 4 mm de diamètre et des dimensions de motif de 3x3mm ou 2x2mm.

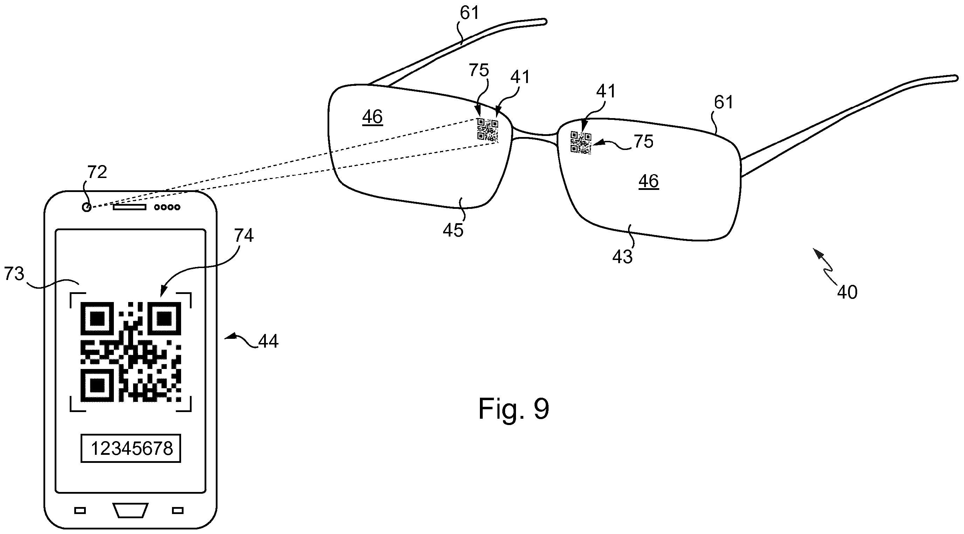

Le verre 42 montré sur les figures 1 et 2 a été détouré pour avoir le contour de la monture de lunettes 61 montrée sur la figure 9.

Avant l'opération de détourage, le verre 42 se présente sous la forme d'une lentille semi-finie ayant un contour circulaire, comme montré à la figure 3. L'une des faces principales, par exemple la face avant 46, est finie, alors que la face opposée, ici la face arrière, est non finie.

Comme il ressort de la figure 3, l'étape de graver le motif 62 sur la face avant 46 du verre 42 est réalisée alors que le verre 42 n'est pas encore détouré ; et le motif 62 est gravé dans une zone du verre sélectionnée pour être présente dans le verre 42 lorsqu'il est monté dans une monture telle que la monture 61.

En variante, le motif 62 est gravé alors que le verre est détouré. Par exemple, l'identifiant unique peut avoir été adjoint au verre sous une autre forme et être reporté sur le verre une fois détouré afin d'assurer que le motif 62 soit bien à l'intérieur du contour du verre détouré. Ladite autre forme peut par exemple être un marquage sur un support extérieur, ou être sur le verre près du pourtour du verre non détouré, par exemple au moyen d'un marquage code imprimé à l'encre, ou formé de la même manière que le marquage selon l'invention.

On notera à cet égard que sur la figure 3, la ligne 63 en trait interrompu montre le contour du verre 42 une fois détouré. Le motif 62 se situe à l'intérieur de la zone délimitée par la ligne 63.

Le motif 62 est situé à proximité de la périphérie du verre détouré.

Le motif 62 est compris dans un carré ayant un côté de 2mm.

On notera que par commodité de représentation les dimensions du motif 62 visible sur les figures 1, 3, 8 et 9 sont exagérées par rapport aux dimensions du verre 42.

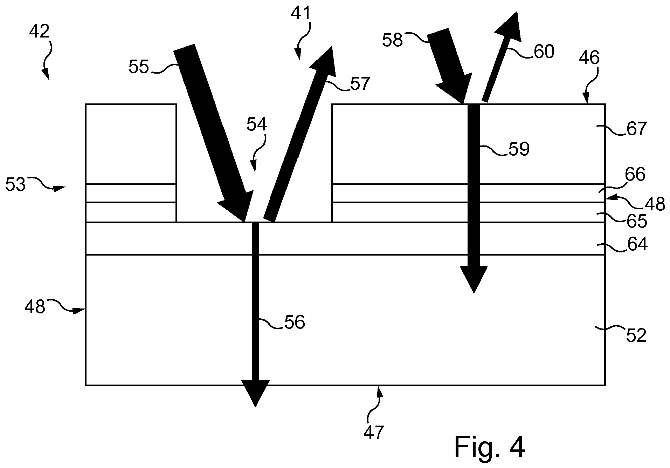

On va maintenant décrire plus en détail la structure du verre 42 de lunettes en référence à la figure 4.

Le verre de lunettes 42 comporte un substrat 52 et un revêtement interférentiel 53 comportant au moins deux couches de surface superposées, recouvrant le substrat 52 du côté de la face avant 46 du verre 42.

Plus précisément, le revêtement interférentiel 53 comporte successivement, depuis le substrat 52 vers la face avant 46 du verre 42, une première couche 64 de métal (chrome, « Cr1 »), une deuxième couche 65 de dioxyde d'étain SnO₂, une troisième couche 66 de métal (chrome, « Cr2 ») et une quatrième couche 67 de monoxyde de silice SiO.

Le substrat 52 est ici un substrat polarisé ou teinté comportant un revêtement anti-rayure de marque Mithril^{®}.

Les couches 67 (SiO) / 66 (Cr2) / 65 (SnO₂) / 64 (Cr1) sont de nature et ont une épaisseur telles que le revêtement qu'elles constituent crée un effet interférentiel augmentant les reflets de façon à créer un miroir avec réflexion. Ce revêtement présente un coefficient de réflexion moyen ayant une valeur nominale d'environ 12 à 15%, avec une plus forte réflexion dans le violet. Le revêtement est présent sur toute, ou quasiment toute, la surface de la face avant du verre, et en particulier sur la surface immédiatement en face de l'œil, lorsque le verre est monté dans une monture et porté par un porteur.

La nature et les caractéristiques physique et optique des couches sont indiquées dans le tableau suivant :

| Numéro de couche à partir du substrat/ Référence de couche (illustration) | Matériau de la couche | Epaisseur de la couche (± 2 nm) |
|---|---|---|
| 1 / (64) | Cr | 15 nm |
| 2 / (65) | SnO₂ | 6 nm |
| 3 / (66) | Cr | 5 nm |
| 4 / (67) | SiO | 65 nm |

Le motif 62 est formé par une pluralité de lacunes ponctuelles 54 d'au moins une couche de surface du revêtement interférentiel 53, dont une seule de ces lacunes 54 est représentée à la figure 4.

Comme expliqué de manière plus détaillée ci-après, ces lacunes ponctuelles 54 résultent de l'irradiation locale des couches supérieures du revêtement interférentiel 53 par un faisceau laser qui provoque l'ablation de certaines de ces couches.

Au niveau de la lacune 54 que l'on voit à la figure 4, les trois couches les plus externes 65, 66 et 67 qui composent le revêtement 53 ont été ablatées.

Par conséquent, au niveau de la lacune 54, le revêtement interférentiel 53 est composé de la couche 64 (Cr1), seule, présente sur le matériau anti-rayure. Cette structure conduit le verre 42 à avoir localement un coefficient de réflexion ayant une valeur particulière d'environ 33%, relativement homogène selon les longueurs d'ondes du visible.

Ainsi, la face avant 46 présente en-dehors des lacunes ponctuelles 54 un coefficient de réflexion de la lumière ayant la valeur nominale prédéterminée et dans chaque lacune ponctuelle 54 un coefficient de réflexion de la lumière ayant la valeur particulière prédéterminée, qui est différente de la valeur nominale.

La différence locale entre les coefficients de réflexion est illustrée très schématiquement sur la figure 4 par des flèches 55, 56 et 57 symbolisant respectivement les proportions de lumière incidente, transmise et réfléchie au niveau d'une lacune ponctuelle 54, et par les flèches 58, 59 et 60 en dehors d'une lacune ponctuelle 54.

On notera que le coefficient de réflexion dans les lacunes ponctuelles 54 formant le motif 62 est supérieur au coefficient de réflexion en dehors des lacunes ponctuelles 54 ; ou autrement dit, la valeur particulière est plus élevée que la valeur nominale.

Le motif 62 apparaît donc à un observateur situé du côté de la face optique avant 46 du verre 42 comme clair sur fond sombre.

Par ailleurs, la chroma et la teinte du reflet est différente.

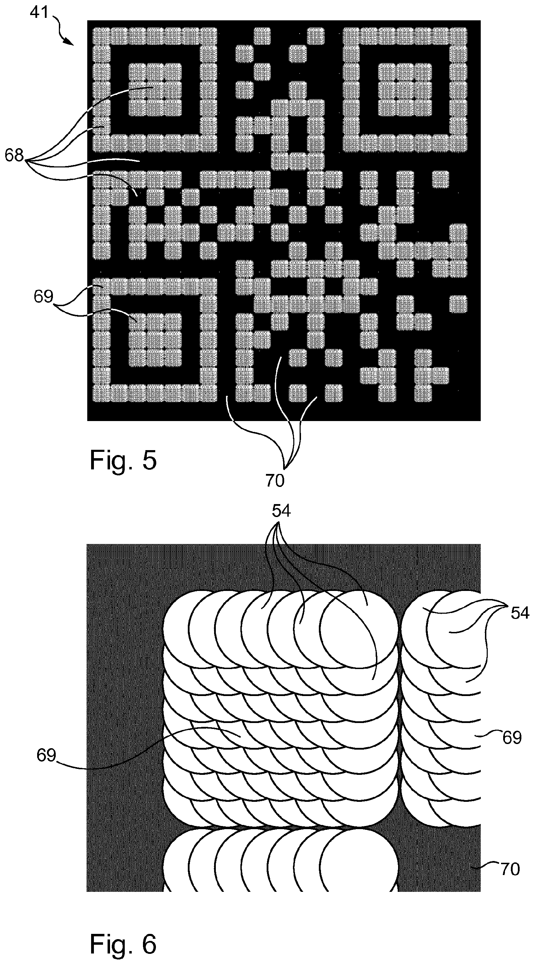

On va maintenant décrire plus en détail le motif 62, c'est-à-dire le marquage 41 formant le code-barres bidimensionnel, à l'appui des figures 5 et 6.

Comme indiqué ci-dessus, par commodité on a représenté sur la figure 5 un motif semblable mais non identique au motif 62 des figures 1 et 3. Pour simplifier, on néglige cette différence dans ce qui suit.

Comme bien visible à la figure 5, le marquage 41 forme un code-barres bidimensionnel comportant une pluralité de modules 68 juxtaposés de façon matricielle.

La pluralité de modules 68 comporte, pour encoder une information selon un langage binaire, des modules d'un premier type 69 chacun formé par une pluralité de dites lacunes ponctuelles 54 et des modules d'un second type 70 chacun situé en-dehors d'une dite lacune ponctuelle 54.

Les modules du premier type 69 apparaissent ici plus clairs que les motifs du second type 70.

Le code bidimensionnel illustré sur la figure 5 comporte 21×21 modules et encode la série de caractères numériques « 99299991 ».

D'une manière générale, un code bidimensionnel comportant 21x21 modules peut encoder jusqu'à 25 caractères alphanumériques.

Chaque module 68 présente la forme d'un carré ayant un côté de 90 µm.

Le motif 62 forme donc un carré ayant un côté de 90 µm × 21 = 1,890 mm.

Comme on le voit sur la figure 6, la pluralité de lacunes ponctuelles 54 dont est formé chaque module 68 est agencée en une matrice comportant une pluralité de lignes et de colonnes, ici sept lignes et sept colonnes.

Chaque ligne et chaque colonne d'un module 68 comporte sept lacunes ponctuelles 54. Un module 68 est donc ici formé de 49 lacunes ponctuelles 54.

Pour graver un module, le faisceau laser grave successivement chaque ligne, les lignes se succédant selon une première direction prédéterminée et selon un premier sens prédéterminé.

Pour graver une ligne, le faisceau laser balaye la surface avant 46 du verre 42 selon une deuxième direction prédéterminée perpendiculaire à la première direction et selon un deuxième sens prédéterminé.

Chaque ligne est gravée selon ce deuxième sens prédéterminé.

On va maintenant décrire plus en détail le procédé de marquage utilisé pour obtenir le marquage 41.

On rappelle que la gravure est ici réalisée par ablation, c'est-à-dire par retrait d'une quantité de matière, au moyen d'un faisceau laser.

Le marquage est ainsi formé d'une pluralité de lacunes ponctuelles 54, chacune réalisée par une ou plusieurs impulsions du laser.

Le procédé de marquage est réalisé au moyen d'une machine de marquage par faisceau laser, comportant une source laser configurée pour émettre un faisceau laser ayant une longueur d'onde de rayonnement déterminée dite longueur d'onde de marquage.

Pour réaliser une lacune ponctuelle 54 en un point donné, dit point de marquage, on insole au moins la couche 65 de dioxyde d'étain SnO₂ du revêtement interférentiel 53 en ce point de marquage au moyen du faisceau laser à la longueur d'onde de marquage, de façon à ablater, au point de marquage, la couche 65 de dioxyde d'étain SnO₂ sur au moins une partie de son épaisseur, et toute couche située entre la source laser et la couche 65 de dioxyde d'étain SnO₂, c'est-à-dire les couches 67 (SiO) et 66 (Cr2).

On notera que la couche 65 de dioxyde d'étain SnO₂ forme ici une couche intérieure 65 qui absorbe la longueur d'onde de marquage de manière plus importante que les couches 67 (SiO) et 66 (Cr2) qui sont situées entre la source laser et la couche 65 de dioxyde d'étain SnO₂.

Le procédé de marquage permet donc de réaliser en un point de marquage une ablation localisée directe d'au moins une partie de la couche intérieure et indirecte des couches situées entre la source électromagnétique et la couche intérieure 65.

Le procédé de marquage permet donc avantageusement le contrôle de la profondeur de la gravure.

Sans vouloir être liée par une quelconque théorie, la demanderesse pense que cela est principalement dû au fait que le faisceau électromagnétique parvient à insoler la couche intérieure 65 qui est en matériau très absorbant à la longueur d'onde du rayonnement comparativement aux autres couches présentes.

En effet, chacune des couches de matériau comprise entre la source électromagnétique et la couche intérieure 65 est au moins partiellement transparente à la longueur d'onde de marquage, c'est-à-dire qu'elle n'absorbe pas au moins en partie à cette longueur d'onde de marquage. De préférence, cette couche est au moins semi-transparente à cette longueur d'onde de marquage, c'est-à-dire qu'elle laisse passer plus de la moitié de l'énergie de cette longueur d'onde de marquage.

Par conséquent, lors de l'exposition au faisceau laser, cette couche intérieure 65 reçoit la majeure partie de l'énergie transmise et est donc dégradée de façon sélective. Etant donné que les couches comprises entre la couche intérieure 65 et la source électromagnétique sont généralement des couches d'oxydes de très faible épaisseur, la dégradation, voire la sublimation de la couche intérieure 65, désolidarise de fait ces couches qui peuvent ensuite être évacuées.

Ainsi, le faisceau laser vise avantageusement à ablater la couche intérieure 65, et permet indirectement l'ablation, le plus souvent par décollement, de toute couche située entre la source électromagnétique et la couche intérieure 65. En d'autres termes, la couche intérieure 65 est détruite (partiellement ou totalement) par le faisceau, les couches comprises entre le faisceau et la couche intérieure 65 étant détruites/retirées par effet collatéral de la destruction de la couche intérieure 65.

L'ablation est telle que l'unique lacune ponctuelle 54 qui en découle a généralement une forme sensiblement cylindrique d'axe sensiblement perpendiculaire à la surface de la couche intérieure 65 la plus éloignée du substrat 52 avant que celle-ci soit ablatée.

Il faut noter cependant que le point de focalisation du laser n'est pas nécessairement situé dans la couche intérieure 65 du revêtement interférentiel 53. Il est même d'ailleurs le plus souvent en dehors de celui-ci, typiquement 1 à 2 mm en dehors de celui-ci, par exemple à 2 mm au-dessus du verre 42.

Pour plus de détails sur le procédé de marquage, on pourra se reporter à la demande de brevet français numéro 1656851, déposée par la demanderesse.

Pour obtenir le marquage 41, on grave successivement les lacunes ponctuelles 54 selon un pas de marquage prédéterminé.

Ici, le procédé de marquage a été mis en oeuvre au moyen d'un laser à impulsion émettant un faisceau à la longueur d'onde 266 nm avec des impulsions de durée 1 ns, une énergie par impulsion de 3 µJ et un diamètre de faisceau d'environ 12 µm de diamètre.

D'une manière générale, l'énergie de marquage est comprise entre 1 et 3 µJ par impulsion.

Ces paramètres permettent d'avoir une relativement basse consommation d'énergie.

Le choix d'un pas de marquage de 10 µm pour un diamètre de faisceau de 12 µm permet d'éviter la présence de zone non irradiée (et donc non marquée) au sein des modules.

Dans certains modes de réalisation alternatifs, le diamètre du faisceau peut être de 20 µm ou de 10 µm avec le même pas de marquage ou un pas de marquage différent.

Ces paramètres permettent en outre d'obtenir une réflexion uniforme sur l'ensemble de la zone gravée.

On notera également que la couche 64 de métal (chrome, « Cr1 »), comprise entre la couche intérieure 65 et le substrat 52, n'absorbe que peu voire très peu la lumière émise à la longueur d'onde du laser (266 nm), ce qui la rend pratiquement insensible au faisceau électromagnétique de marquage.

Elle n'est donc pas détruite par insolation par le faisceau laser.

Il est donc possible de superposer les points de marquage sans risque de surgravure au niveau du recoupement entre deux points de marquage. Par conséquent, le procédé de marquage permet avantageusement de réaliser un marquage continu sur la surface du verre, homogène, sans effet « pointilliste ».

Ceci est favorable à une bonne lecture du motif 62 formant le code-barres par un appareil portable électronique équipé d'un capteur d'image, tel qu'un smartphone, avec lequel on souhaiterait lire le code.

Dans une variante non illustrée, le verre est un verre ophtalmique constitué d'un substrat qui est un verre d'indice 1,5 de la société Essilor International^{®} comportant un revêtement anti-rayure de marque Mithril^{®}, sur lequel est superposé un revêtement interférentiel constitué d'un revêtement comportant de façon successive, en partant du vernis présent sur le substrat une première couche d'oxyde de zirconium ZrO₂ (C1), une première couche de dioxyde de silice SiO₂ (C2), une seconde couche de dioxyde de zirconium ZrO₂ (C3), une couche de dioxyde d'étain SnO₂ (C4), ou couche intérieure, une deuxième couche de dioxyde de silice SiO₂ (C5), ou couche extérieure, une couche antisalissure (C6) (hydrophobe et/ou oléophobe), une couche de difluorure de magnésium MgF₂ (C7) d'épaisseur 37 nm et une couche d'oxyde de magnésium MgO (C8) de quelques nanomètres d'épaisseur.

L'ensemble des couches C1, C2, C3, C4 et C5, sans tenir compte des couches respectives MgF₂ (C7) et MgO (C8) qui sont des couches temporaires, réalise un revêtement interférentiel qui est ici un revêtement anti-reflets, ayant des épaisseurs de couches calculées au moyen d'un logiciel connu de l'homme du métier (qui prend en considération la nature de ces couches) afin de présenter un coefficient de réflexion totale ayant une valeur nominale inférieure à 1%, par exemple 0,85% selon les échantillons mesurés.

La nature et les caractéristiques physique et optique des couches du revêtement interférentiel sont indiquées dans le tableau suivant :

| Numéro de couche à partir du substrat / Référence de couche | Matériau de la couche | Indice optique de la couche | Epaisseur de la couche (± 3 nm) |
|---|---|---|---|
| 1 / (C1) | ZrO₂ | 2,0038 | 30 nm |
| 2 / (C2) | SiO₂ | 1,4741 | 40 nm |
| 3 / (C3) | ZrO₂ | 2,0038 | 60 nm |
| 4 / (C4) | SnO₂ | 1,8432 | 6 nm |
| 5 / (C5) | SiO₂ | 1,4741 | 110 nm |

La réalisation du procédé de marquage vient faire une ablation locale de la couche SiO₂ extérieure (C5), des couches C6, C7 et C8, extérieures à la couche extérieure SiO₂ (C5), ainsi qu'une ablation au moins partielle de la couche intérieure C4, en SnO₂.

En un point de marquage, c'est-à-dire dans une lacune ponctuelle, la valeur particulière de la réflexion mesurée est d'environ 8,5%, soit environ 10 fois plus qu'en dehors d'une lacune ponctuelle, ce qui permet d'obtenir un bon contraste.

D'une manière générale, avec un revêtement de type anti-reflets, un facteur 5 à 15 est observé entre la valeur nominale (en-dehors des lacunes ponctuelles) et la valeur particulière (dans les lacunes ponctuelles).

D'une manière générale encore, avec un revêtement de type anti-reflets, la valeur nominale (en-dehors des lacunes ponctuelles) est inférieure à 1,4% et la valeur particulière (dans les lacunes ponctuelles) est comprise entre 8 et 15%.

La valeur particulière du coefficient de réflexion est supérieure à la valeur nominale, de sorte que dans cette variante non illustrée où le revêtement interférentiel est anti-reflets, de même que pour le revêtement interférentiel de type miroir illustré sur les figures 1 à 6, le motif apparaît comme clair sur fond sombre à un observateur situé du côté de la face avant.

Il est à noter qu'en transmission, la différence de contraste est beaucoup plus faible qu'en réflexion.

En effet, la valeur nominale du coefficient de transmission (en dehors des lacunes ponctuelles) est d'environ 98% (99%-1%), tandis que la valeur particulière du coefficient de transmission (à l'endroit des lacunes ponctuelles) est comprise entre environ 84% et environ 91%, avec donc entre la valeur nominale et la valeur particulière du coefficient de transmission un facteur compris entre environ 0,86 et environ 0,92.

Un tel facteur entre les valeurs particulière et nominale des coefficients de transmission conduit à une différence de contraste peu notable pour un observateur situé du côté de la face arrière du verre, en particulier pour le porteur de ce verre.

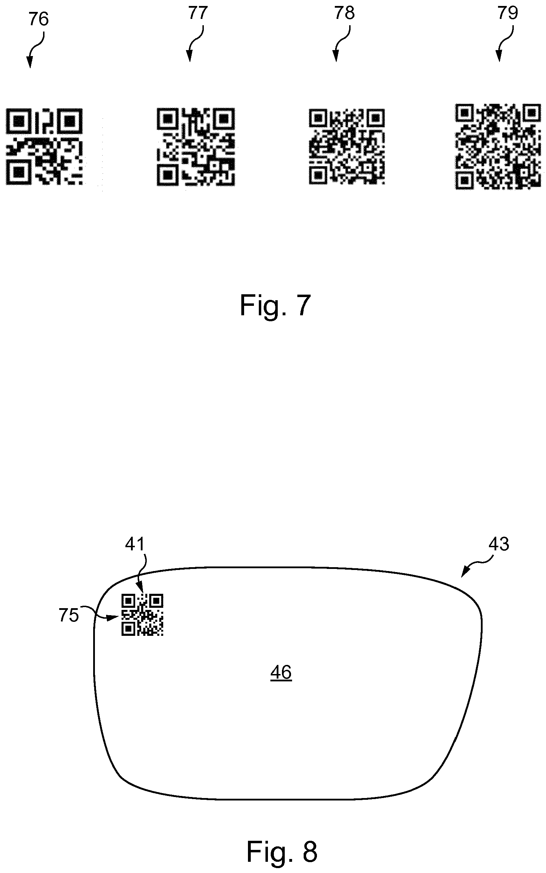

Les figures 8 et 9 illustrent une variante dans laquelle un verre 43 est pourvu d'un revêtement interférentiel miroir et muni d'un marquage 41 gravé sur sa face avant 46, formant un motif 75 visible par un observateur situé du côté de la face avant du verre 43.

La valeur nominale en réflexion moyenne est comprise entre 10% et 15% et la valeur particulière est comprise entre 5% et 10%, inférieure à la valeur nominale. Par exemple inférieure d'au moins 3% ou de préférence d'au moins 5%.

La valeur particulière du coefficient de réflexion est dans ce cas inférieure à sa valeur nominale, de sorte que le motif 75 est vu comme sombre sur fond clair.

La figure 9 représente une paire de lunettes 40 équipée du verre 43 et d'un verre 45 similaire, ainsi qu'un appareil électronique portable 44 en train de prendre une photographie 74 du marquage et d'analyser la photographie 74 pour retrouver le code formé par le marquage 41.

La paire de lunettes 40 comporte une monture 61 sur laquelle sont montés les verres 43 et 45 avec leur face arrière tournée vers le porteur des lunettes (non illustré), de sorte que les marquages 41 sont transparents ou invisibles pour le porteur ou en tout cas peu visibles ou pas gênants.

Pour chaque verre 43 et 45, le marquage 41 est situé du côté nasal et du côté supérieur du verre. En variante le marquage est situé du côté temporal et/ou du côté inférieur du verre.

L'appareil électronique portable 44 est un smartphone qui de manière classique comporte un processeur, un capteur d'image 72, un écran d'affichage 73 ainsi que des organes de communication sans fil configurés pour se connecter à un réseau tel qu'internet.

L'appareil électronique portable 44 est configuré pour mettre en oeuvre un procédé de lecture du marquage 41 afin de retrouver le code puis le décoder. Les informations décodées contenues dans le code s'affichent sur l'écran 73 de l'appareil 44, ici la suite de caractères numériques « 12345678 ».

Comme indiqué ci-dessus, cette série de caractères est un identifiant unique propre au verre 45.

L'appareil électronique portable 44 est configuré pour intervenir dans un procédé où après qu'il a mis en oeuvre l'étape de retrouver et décoder cet identifiant, sont mises en oeuvre une étape d'envoyer sur un réseau une requête à un serveur distant, puis une étape d'obtenir des données de retour d'un serveur distant, et une étape d'affichage de données.

Selon le type de requêteur, les données de retour envoyées par le serveur distant sont différentes.

Par exemple, une application informatique est embarquée sur l'appareil électronique portable 44 afin de le configurer en conséquence, en particulier pour que l'appareil 44 procède à une lecture du marquage 41, au décodage du motif 75 retrouvé, puis à un envoi sur un réseau d'une requête à un serveur distant, puis à une réception de données de retour d'un serveur distant, et à un affichage de données d'affichage en fonction de ces données de retour.

Cette application est avantageusement configurée pour que la requête envoyée comporte au moins une partie de l'identifiant encodé par le motif 75.

D'une manière générale, le motif code bidimensionnel 75 formé par le marquage 41 comporte sur une étendue prédéterminée des zones foncées et des zones claires.

Dans un mode préférentiel, afin de faciliter la lecture du marquage 41, le verre est positionné de façon à avoir la face comportant le marquage orientée vers une source de lumière diffuse, l'appareil électronique portable est similairement orienté de façon à ce que sa caméra embarquée soit orientée vers la zone comprenant le marquage, et le verre et l'appareil électronique sont ensuite orientés de façon à ce que le reflet de la source de lumière diffuse sur le verre englobe le marquage 41 lorsque vu par la caméra de l'appareil électronique portable, rendant ainsi le marquage 41 visible par la caméra par réflexion de la lumière.

La source de lumière diffuse peut être la lumière extérieure du soleil, directement ou au travers d'une vitre, ou être une autre source de lumière diffuse formant un reflet large sur le verre de lunette, en particulier un reflet de dimension supérieure à celle du marquage 41.

Pour chacun des verres 43 et 45 de la paire de lunettes illustrée à la figure 9, le procédé de gravure du motif a été mis en oeuvre de sorte que les zones gravées, qui forment le motif 75, correspondent aux zones foncées du code bidimensionnel.

Autrement dit, le motif 75 est formé par l'ensemble des zones foncées du code bidimensionnel.

Puisque le motif 75 est vu comme sombre sur fond clair, les zones foncées du code bidimensionnel correspondent aux zones sombres du motif 75.

Ainsi, pour retrouver le code bidimensionnel, le procédé de lecture mis en oeuvre par le smartphone doit comprendre une étape de prendre la photographie 74 du motif 75, puis une étape d'analyser la photographie 74 pour détecter les zones sombres du motif 75.

On notera que pour le verre de lunettes 42 illustré sur les figures 1 à 3, le procédé de gravure a également été mis en oeuvre de sorte que les zones gravées, qui forment le motif 62, correspondent aux zones foncées du code bidimensionnel.

Autrement dit, le motif 62 est formé par l'ensemble des zones foncées du code bidimensionnel.

En revanche, dans ce cas, le motif 62 est vu, en réflexion, comme clair sur fond sombre. Par conséquent, les zones foncées du code bidimensionnel correspondent aux zones claires du motif 62.

Cette apparence de motif clair sur fond sombre est liée au fait que dans ce cas, la valeur particulière de réflexion est plus importante que la valeur nominale des zones non gravées. Ainsi, les zones gravées, qui forment le motif 62, sont observées, en réflexion, comme plus lumineuses que les zones non gravées.

Il est intéressant de noter que les couleurs utilisées pour illustrer les figures ne sont pas représentatives de la réalité et n'ont pour vocation que d'illustrer le contraste entre le motif 62 et le reste du verre. En pratique, si le cas illustré par les figures 1 à 3 peut s'appliquer à des verres solaires comportant un revêtement miroir, ou des verres solaires ayant un revêtement anti-reflets ou miroir, verres ayant donc réellement un aspect foncé, ce cas s'applique aussi aux verres clairs ayant, dans les zones non gravées, une valeur de transmission comprise entre 80% et 98%. La valeur de transmission, dans les zones gravées, peut même être supérieure à 88% ou 93% voire même 95% pour des verres avec des anti-reflets. Le cas illustré par les figures 1 à 3, 5 et 6 est en particulier un des modes de réalisation préférable pour des verres clairs comportant un anti-reflets.

En effet, dans le cas de ces verres clairs, comportant un anti-reflets, la valeur nominale en réflexion est inférieure à 1,4%, voire inférieure à 1%. Un contraste important peut alors être obtenu en dégradant localement l'anti-reflet, voir en transformant localement l'empilement interférentiel en un miroir partiel. En effet, le contraste se fait alors entre une surface générale du verre n'ayant quasiment pas de réflexion et un motif local identifiable par un coefficient de réflexion plus important, d'au moins un facteur 4, voir facilement 5 à 15 fois plus important que la valeur nominale. Il faut noter que si la surface du verre apparait sombre lorsque l'appareil, par exemple un smartphone, essaye de lire le motif 62, et par le fait que la lecture du motif se fait par réflexion, la surface du verre apparait normalement claire et transparente. L'effet sombre de la zone non gravée n'apparait tel que par contraste avec le motif 62, mais est autrement un verre vu comme clair.

Ainsi, si la paire de lunettes étaient équipée de verres similaires au verre 42, il faudrait, pour retrouver le code bidimensionnel, que le procédé de lecture comporte une étape supplémentaire d'inversion des contrastes de la photographie 74 prise par le smartphone avant de pouvoir détecter le motif 62 et retrouver le code bidimensionnel.

Le procédé mis en oeuvre par le programme, le logiciel ou l'application utilisé par le smartphone pour détecter le motif, ou par tout autre appareil équivalent, par exemple une tablette ou un serveur distant auquel le smartphone envoi l'image ou la photographie, peut ainsi comporter une étape d'inversion des contrastes, ou une étape de choix de mise en oeuvre de ladite étape d'inversion des contrastes. Cette étape de choix peut ainsi être mise en oeuvre après une étape de détection de contrastes sur l'image et une étape de détection d'un motif sombre sur fond clair. Alternativement, le mode de fonctionnement par défaut peut comporter une inversion des contrastes et n'utiliser l'image sans inversion uniquement lorsqu'aucun code bidimensionnel n'est identifié en mode contraste inversé.

La figure 7 montre différentes versions d'un code bidimensionnel qui peuvent être utilisées pour obtenir un verre tel que le verre 42 ou les verres 43 et 45.

Plus précisément, la figure 7 montre de la gauche vers la droite une première version 76, une deuxième version 77, une troisième version 78 et une quatrième version 79 ; ces versions comportant respectivement 21x21, 25x25, 29x29 et 33x33 modules.

Chaque module présente la forme d'un carré ayant un côté de 90 µm.

La version 25x25 forme donc un carré de 90 µm × 25 = 2,250mm.

La version 29x29 forme donc un carré de 90 µm × 29 = 2,610mm.

La version 33x33 forme donc un carré de 90 µm × 33 = 2,970mm.

Alternativement, le motif peut avoir des modules légèrement plus petits, ou en moins grand nombre et former un motif d'environ 1,9mm de côté ou environ 2mm de côté... Etc.

Pour simplifier le dessin, les quatre versions sont montrées toutes à la même taille sur la figure 7.

Dans des variantes non illustrées :
- le verre n'est pas encore détouré pour avoir le contour d'une monture de lunettes prédéterminé ;
- le code-barres est unidimensionnel, par exemple un code-barres de type EAN, Alpha39 ou GS1 ;
- le code bidimensionnel n'est pas un QR code mais un code bidimensionnel d'un autre type, par exemple un code de type DataMatrix, Aztek, MaxiCode ou High Capacity Color Barcode ;
- le code encode des informations différentes d'un identifiant unique propre au verre, par exemple des caractéristiques optiques du verre et/ou des paramètres géométriques ;
- la structure du revêtement interférentiel miroir est différente ;
- la structure du revêtement interférentiel anti-reflets est différente et correspond par exemple à la structure exposée dans le tableau suivant :

| Numéro de couche à partir du substrat | Matériau de la couche | Indice optique de la couche | Epaisseur de la couche (±3 nm) |
|---|---|---|---|
| 1 | SiO₂ | 1,4658 | 150 nm |
| 2 | ZrO₂ | 2,0038 | 20 nm |
| 3 | SiO₂ | 1,4741 | 20 nm |
| 4 | ZrO₂ | 2,0038 | 100 nm |
| 5 | SnO₂ | 1,8432 | 6 nm |
| 6 | SiO₂ | 1,4741 | 75 nm |

avec une valeur nominale du coefficient de réflexion inférieure à 1%, par exemple 0,7% ou 0,8%, et une valeur particulière proche de 10%, plus précisément entre 9,5%, et 10,5%, après ablation totale de la couche 6 et ablation au moins partielle de la couche 5 dans les lacunes ponctuelles ;
- l'appareil électronique portable est configuré pour mettre en oeuvre une vidéo du motif plutôt qu'une photographie ;
- l'appareil électronique portable est différent d'un smartphone, par exemple un autre appareil portable grand public configuré pour communiquer sans fil avec un réseau tel qu'un appareil de téléphonie mobile, une tablette électronique, des lunettes dites « intelligentes » et/ou un appareil de photographie connecté, ou même un ordinateur portable muni d'une caméra embarquée et d'un mode de communication réseau, tel que le WIFI ou filaire ; ce peut aussi être un de ces dits appareils connecté indirectement à un réseau, par exemple par une communication sans fil à un serveur, un ordinateur, ou un relai, et une communication filaire ou sans fil entre ledit serveur, ordinateur ou relai et le réseau ; et/ou
- le réseau peut être un réseau interne à une entreprise, ou plus particulièrement un réseau étendu, voir mondial, tel que le réseau Internet.

De nombreuses autres variantes sont possibles en fonction des circonstances, et l'on rappelle à cet égard que l'invention ne se limite pas aux exemples décrits et représentés.

## Revendications

1. Verre de lunettes muni d'un marquage permanent, **caractérisé en ce que** ledit verre (42, 43, 45) comporte un substrat (52) et un revêtement interférentiel (53) anti-reflets ou miroir recouvrant ledit substrat (52) du côté de la face avant (46), ledit revêtement interférentiel (53) formant un motif (62, 75) code-barres unidimensionnel ou bidimensionnel, ledit marquage (41) étant formé par une pluralité de lacunes ponctuelles (54) sur une partie d'une épaisseur dudit revêtement interférentiel (53), ladite face avant (46) présentant en-dehors desdites lacunes ponctuelles (54) un coefficient de réflexion de la lumière ayant une valeur nominale prédéterminée et dans chaque dite lacune ponctuelle (54) un coefficient de réflexion de la lumière ayant une valeur particulière prédéterminée différente de ladite valeur nominale,
dans lequel le revêtement interférentiel (53) comporte au moins deux couches de surface superposées (65, 66, 67), incluant une couche intérieure (65) qui absorbe une longueur d'onde de marquage de manière plus importante que toute couche (66, 67) située entre une source laser et la couche intérieure (65), chacune des couches de matériau comprise entre la source laser et la couche intérieure (65) laisse passer plus de la moitié de l'énergie de cette longueur d'onde de marquage, la longueur d'onde de marquage étant 266 nm, chaque lacune ponctuelle (54) étant réalisée par ablation d'au moins une partie de l'épaisseur de la couche intérieure (65), et de toute couche située entre la source laser et la couche intérieure (65).

2. Verre de lunettes selon la revendication 1, **caractérisé en ce qu'**il est dans un état détouré pour avoir le contour (63) d'une monture de lunettes (61) prédéterminée.

3. Verre de lunettes selon l'une des revendications 1 et 2, **caractérisé en ce que** ledit motif (62, 75) est bidimensionnel comportant une pluralité de modules (68) juxtaposés de façon matricielle, ladite pluralité de modules (68) comportant, pour encoder une information selon un langage binaire, des modules d'un premier type (69) chacun formé par une pluralité de dites lacunes ponctuelles (54) et des modules d'un second type (70) chacun situé en-dehors d'une dite lacune ponctuelle (54).

4. Verre de lunettes selon l'une des revendications 1 à 3, **caractérisé en ce que** ledit motif (62, 75) est compris dans un carré ayant un côté de 2 mm.

5. Verre de lunettes selon la revendication 4, **caractérisé en ce que** chaque dit module (68) présente la forme d'un carré ayant un côté de 90 µm.

6. Verre de lunettes selon l'une des revendications 4 et 5, **caractérisé en ce que** ledit code bidimensionnel comporte entre 21x21 et 33x33 modules (68).

7. Verre de lunettes selon l'une quelconque des revendications 3 à 6, **caractérisé en ce que** ladite pluralité de lacunes ponctuelles (54) dont est formé chaque module (68) est agencée en une matrice comportant une pluralité de lignes et de colonnes.

8. Verre de lunettes selon l'une quelconque des revendications 1 à 7, **caractérisé en ce que** ledit revêtement interférentiel (53) est anti-reflets, ladite valeur nominale est inférieure à 1,4% et de préférence inférieure à 0,85% et ladite valeur particulière est comprise entre 8 et 15%.

9. Verre de lunettes selon l'une quelconque des revendications 1 à 7, **caractérisé en ce que** ledit revêtement interférentiel est miroir, ladite valeur nominale est comprise entre 12% et 15% et ladite valeur particulière est comprise entre 32% et 34%.

10. Verre de lunettes selon l'une quelconque des revendications 1 à 9, **caractérisé en ce que** ladite valeur particulière est plus élevée que ladite valeur nominale de sorte que ledit motif (62) est vu comme clair sur fond sombre, ledit code-barres unidimensionnel ou bidimensionnel comporte sur une étendue prédéterminée des zones foncées et des zones claires, et ledit motif (62) est formé par l'ensemble des zones foncées dudit code.

11. Verre de lunettes selon l'une quelconque des revendications 1 à 7, **caractérisé en ce que** ledit revêtement interférentiel est miroir, ladite valeur nominale est comprise entre 10% et 15% et ladite valeur particulière est comprise entre 5% et 10% en étant inférieure à la valeur nominale.

12. Verre de lunettes selon l'une quelconque des revendications 1 à 7 et 11, **caractérisé en ce que** ledit revêtement interférentiel est miroir et ledit motif (75) est vu comme sombre sur fond clair, ledit code unidimensionnel ou bidimensionnel comporte sur une étendue prédéterminée des zones foncées et des zones claires, et ledit motif (75) est formé par l'ensemble des zones foncées dudit code.

13. Paire de lunettes (40) **caractérisée en ce qu'**elle comporte au moins un verre (42, 43, 45) selon l'une quelconque des revendications 1 à 12.

14. Procédé de marquage d'un verre (42, 43, 45) de lunettes selon l'une quelconque des revendications 1 à 12, le procédé de marquage étant réalisé au moyen d'une machine de marquage par faisceau laser, comportant une source laser configurée pour émettre un faisceau laser ayant une longueur d'onde de rayonnement déterminée dite longueur d'onde de marquage, ledit verre (42, 43, 45) comportant un substrat (52) et un revêtement interférentiel (53) anti-reflets ou miroir recouvrant ledit substrat (52) du côté de la face avant (46), le revêtement interférentiel (53) comportant au moins deux couches de surface superposées (65, 66, 67), incluant une couche intérieure (65) qui absorbe la longueur d'onde de marquage de manière plus importante que toute couche (66, 67) située entre la source laser et la couche intérieure (65), chacune des couches de matériau comprise entre la source laser et la couche intérieure (65) laissant passer plus de la moitié de l'énergie de cette longueur d'onde de marquage, procédé dans lequel on insole le revêtement interférentiel (53) en un point de marquage au moyen du faisceau laser à la longueur d'onde de marquage pour réaliser chaque lacune ponctuelle (54) par ablation d'au moins une partie de l'épaisseur de la couche intérieure (65), et de toute couche située entre la source laser et la couche intérieure (65), et dans lequel on grave successivement les lacunes ponctuelles (54) selon un pas de marquage prédéterminé.

## Patentansprüche

1. Brillenglas, das mit einer permanenten Markierung versehen ist, **dadurch gekennzeichnet, dass** das Glas (42, 43, 45) ein Substrat (52) und eine entspiegelte oder spiegelnde Interferenzbeschichtung (53) umfasst, die das Substrat (52) auf der Seite der Vorderseite (46) überzieht, wobei die Interferenzbeschichtung (53) ein eindimensionales oder zweidimensionales Strichcode-Muster (62, 75) bildet, wobei die Markierung (41) durch eine Vielzahl von punktförmigen Lücken (54) auf einem Teil einer Dicke der Interferenzbeschichtung (53) gebildet wird, wobei die Vorderseite (46) außerhalb der punktförmigen Lücken (54) einen Lichtreflexionskoeffizienten aufweist, der einen vorbestimmten Nennwert hat, und in jeder punktförmigen Lücke (54) einen Lichtreflexionskoeffizienten, der einen vorbestimmten besonderen Wert hat, der von dem Nennwert verschieden ist,
wobei die Interferenzbeschichtung (53) mindestens zwei übereinander liegende Oberflächenschichten (65, 66, 67) umfasst, die eine innere Schicht (65) beinhalten, die eine Markierungswellenlänge stärker als jede Schicht (66, 67), die zwischen einer Laserquelle und der inneren Schicht (65) gelegen ist, absorbiert, wobei jede der Materialschichten, die zwischen der Laserquelle und der inneren Schicht (65) enthalten ist, mehr als die Hälfte der Energie dieser Markierungswellenlänge durchlässt, wobei die Markierungswellenlänge 266 nm beträgt, wobei jede punktförmige Lücke (54) durch Abtragen mindestens eines Teils der Dicke der inneren Schicht (65) und jeder zwischen der Laserquelle und der inneren Schicht (65) gelegenen Schicht ausgeführt wird.

2. Brillenglas nach Anspruch 1, **dadurch gekennzeichnet, dass** es in einem zugeschnittenen Zustand ist, so dass es die Kontur (63) einer vorbestimmten Brillenfassung (61) hat.

3. Brillenglas nach einem der Ansprüche 1 und 2, **dadurch gekennzeichnet, dass** das Muster (62, 75) zweidimensional ist, wobei es eine Vielzahl von matrixartig nebeneinander liegenden Modulen (68) umfasst, wobei die Vielzahl von Modulen (68), zum Codieren einer Information gemäß einer binären Sprache, Module eines ersten Typs (69) umfasst, von denen jedes durch eine Vielzahl der punktförmigen Lücken (54) gebildet wird, und Module eines zweiten Typs (70), von denen jedes außerhalb einer punktförmigen Lücke (54) gelegen ist.

4. Brillenglas nach einem der Ansprüche 1 bis 3, **dadurch gekennzeichnet, dass** das Muster (62, 75) in einem Quadrat mit einer Kantenlänge von 2 mm enthalten ist.

5. Brillenglas nach Anspruch 4, **dadurch gekennzeichnet, dass** jedes Modul (68) die Form eines Quadrats mit einer Kantenlänge von 90 µm aufweist.

6. Brillenglas nach einem der Ansprüche 4 und 5, **dadurch gekennzeichnet, dass** der zweidimensionale Code zwischen 21x21 und 33x33 Module (68) umfasst.

7. Brillenglas nach einem der Ansprüche 3 bis 6, **dadurch gekennzeichnet, dass** die Vielzahl von punktförmigen Lücken (54), aus denen jedes Modul (68) gebildet wird, in einer Matrix angeordnet ist, die eine Vielzahl von Zeilen und Spalten umfasst.

8. Brillenglas nach einem der Ansprüche 1 bis 7, **dadurch gekennzeichnet, dass** die Interferenzbeschichtung (53) entspiegelt ist, der Nennwert kleiner als 1,4 % und bevorzugt kleiner als 0,85 % ist und der besondere Wert zwischen 8 und 15 % beträgt.

9. Brillenglas nach einem der Ansprüche 1 bis 7, **dadurch gekennzeichnet, dass** die Interferenzbeschichtung spiegelnd ist, der Nennwert zwischen 12 % und 15 % beträgt und der besondere Wert zwischen 32 % und 34 % beträgt.

10. Brillenglas nach einem der Ansprüche 1 bis 9, **dadurch gekennzeichnet, dass** der besondere Wert höher als der Nennwert ist, so dass das Muster (62) als hell auf dunklem Untergrund gesehen wird, der eindimensionale oder zweidimensionale Strichcode über einen vorbestimmten Umfang dunkle Bereiche und helle Bereiche umfasst und das Muster (62) durch die Gesamtheit der dunklen Bereiche des Codes gebildet wird.

11. Brillenglas nach einem der Ansprüche 1 bis 7, **dadurch gekennzeichnet, dass** die Interferenzbeschichtung spiegelnd ist, der Nennwert zwischen 10 % und 15 % beträgt und der besondere Wert zwischen 5 % und 10 % beträgt, wobei er kleiner als der Nennwert ist.

12. Brillenglas nach einem der Ansprüche 1 bis 7 und 11, **dadurch gekennzeichnet, dass** die Interferenzbeschichtung spiegelnd ist und das Muster (75) als dunkel auf hellem Untergrund gesehen wird, der eindimensionale oder zweidimensionale Strichcode über einen vorbestimmten Umfang dunkle Bereiche und helle Bereiche umfasst und das Muster (75) durch die Gesamtheit der dunklen Bereiche des Codes gebildet wird.

13. Brille (40), **dadurch gekennzeichnet, dass** sie mindestens ein Glas (42, 43, 45) nach einem der Ansprüche 1 bis 12 umfasst.

14. Verfahren zum Markieren eines Brillenglases (42, 43, 45) nach einem der Ansprüche 1 bis 12, wobei das Verfahren mittels einer Markierungsmaschine durch Laserstrahl ausgeführt wird, die eine Laserquelle umfasst, die dazu ausgestaltet ist, einen Laserstrahl zu emittieren, der eine bestimmte Strahlungswellenlänge, Markierungswellenlänge genannt, hat, wobei das Glas (42, 43, 45) ein Substrat (52) und eine entspiegelte oder spiegelnde Interferenzbeschichtung (53) umfasst, die das Substrat (52) auf der Seite der Vorderseite (46) überzieht, wobei die Interferenzbeschichtung (53) mindestens zwei übereinander liegende Oberflächenschichten (65, 66, 67) umfasst, die eine innere Schicht (65) beinhalten, die die Markierungswellenlänge stärker als jede Schicht (66, 67), die zwischen der Laserquelle und der inneren Schicht (65) gelegen ist, absorbiert, wobei jede der Materialschichten, die zwischen der Laserquelle und der inneren Schicht (65) enthalten ist, mehr als die Hälfte der Energie dieser Markierungswellenlänge durchlässt, Verfahren, bei dem die Interferenzbeschichtung (53) an einem Markierungspunkt mittels des Laserstrahls mit der Markierungswellenlänge bestrahlt wird, um jede punktförmige Lücke (54) durch Abtragen mindestens eines Teils der Dicke der inneren Schicht (65) und jeder zwischen der Laserquelle und der inneren Schicht (65) gelegenen Schicht auszuführen, und bei dem die punktförmigen Lücken (54) nacheinander gemäß einer vorbestimmten Markierungsschrittweite graviert werden.

## Claims

1. Spectacle lens provided with a permanent marking, **characterized in that** said lens (42, 43, 45) comprises a substrate (52) and an anti-reflective or mirror interferential coating (53) covering said substrate (52) on the side of the front face (46), said interferential coating (53) forming a one-dimensional or two-dimensional barcode pattern (62, 75), said marking (41) being formed by a plurality of punctual gaps (54) on a part of a thickness of said interferential coating (53), said front face (46) exhibiting outside of said punctual gaps (54) a coefficient of reflection of light having a predetermined nominal value and in each said punctual gap (54) a coefficient of reflection of light having a predetermined particular value different from said nominal value,
in which the interferential coating (53) comprises at least two overlaid surface layers (65, 66, 67), including an interior layer (65) which absorbs a marking wavelength in a more considerable manner than any layer (66, 67) situated between a laser source and the interior layer (65), each of the layers of material lying between the laser source and the interior layer (65) lets through more than half the energy of this marking wavelength, the marking wavelength being 266 nm, each punctual gap (54) being produced by ablation of at least a part of the thickness of the interior layer (65), and of any layer situated between the laser source and the interior layer (65) .

2. Spectacle lens according to Claim 1, **characterized in that** it is in an edged state so as to have the contour (63) of a predetermined spectacle frame (61).

3. Spectacle lens according to one of Claims 1 and 2, **characterized in that** said pattern (62, 75) is two-dimensional comprising a plurality of modules (68) juxtaposed in matrix fashion, said plurality of modules (68) comprising, in order to encode an item of information according to a binary language, modules of a first type (69) each formed by a plurality of said punctual gaps (54) and modules of a second type (70) each situated outside of a said punctual gap (54).

4. Spectacle lens according to one of Claims 1 to 3, **characterized in that** said pattern (62, 75) lies within a square having a side of 2 mm.

5. Spectacle lens according to Claim 4, **characterized in that** each said module (68) exhibits the shape of a square having a side of 90 µm.

6. Spectacle lens according to one of Claims 4 and 5, **characterized in that** said two-dimensional code comprises between 21x21 and 33x33 modules (68).

7. Spectacle lens according to any one of Claims 3 to 6, **characterized in that** said plurality of punctual gaps (54) of which each module (68) is formed is arranged in a matrix comprising a plurality of rows and of columns.

8. Spectacle lens according to any one of Claims 1 to 7, **characterized in that** said interferential coating (53) is anti-reflective, said nominal value is less than 1.4% and preferably less than 0.85% and said particular value lies between 8 and 15%.

9. Spectacle lens according to any one of Claims 1 to 7, **characterized in that** said interferential coating is mirror, said nominal value lies between 12% and 15% and said particular value lies between 32% and 34%.

10. Spectacle lens according to any one of Claims 1 to 9, **characterized in that** said particular value is higher than said nominal value so that said pattern (62) is seen as bright on a dark background, said one-dimensional or two-dimensional barcode comprises over a predetermined extent dark zones and bright zones, and said pattern (62) is formed by the set of dark zones of said code.

11. Spectacle lens according to any one of Claims 1 to 7, **characterized in that** said interferential coating is mirror, said nominal value lies between 10% and 15% and said particular value lies between 5% and 10% while being less than the nominal value.

12. Spectacle lens according to any one of Claims 1 to 7 and 11, **characterized in that** said interferential coating is mirror and said pattern (75) is seen as dark on a bright background, said one-dimensional or two-dimensional code comprises over a predetermined extent dark zones and bright zones, and said pattern (75) is formed by the set of dark zones of said code.

13. Pair of spectacles (40), **characterized in that** it comprises at least one lens (42, 43, 45) according to any one of Claims 1 to 12.

14. Method for marking a spectacle lens (42, 43, 45) according to any one of Claims 1 to 12, the marking method being carried out by means of a laser beam marking machine, comprising a laser source configured to emit a laser beam having a determined radiation wavelength known as the marking wavelength, said lens (42, 43, 45) comprising a substrate (52) and an anti-reflective or mirror interferential coating (53) covering said substrate (52) on the side of the front face (46), the interferential coating (53) comprising at least two overlaid surface layers (65, 66, 67), including an interior layer (65) which absorbs the marking wavelength in a more considerable manner than any layer (66, 67) situated between the laser source and the interior layer (65), each of the layers of material lying between the laser source and the interior layer (65) letting through more than half the energy of this marking wavelength, in which method the interferential coating (53) is irradiated at a marking point by means of the laser beam of the marking wavelength, so as to produce each punctual gap (54) by ablation of at least a part of the thickness of the interior layer (65), and of any layer situated between the laser source and the interior layer (65), and in which the punctual gaps (54) are engraved successively according to a predetermined marking spacing.
